# EUROPÄISCHE PATENTSCHRIFT

(11) **EP 3 863 554 B1**
(45) Veröffentlichungstag und Bekanntmachung des Hinweises auf die Patenterteilung: **07.06.2023**
(21) Anmeldenummer: 19812906.6
(22) Anmeldetag: 10.10.2019
(51) Int. Cl.: A61C 1/08, A61C 1/05

(54) **BOHRSCHABLONE ZUR DURCHFÜHRUNG EINER IMPLANTATBOHRUNG FÜR EIN DENTALES IMPLANTAT UND VERFAHREN ZUM VIRTUELLEN ENTWURF UND/ODER HERSTELLUNG DER BOHRSCHABLONE**
DRILL TEMPLATE FOR DRILLING AN IMPLANT HOLE FOR A DENTAL IMPLANT AND METHOD FOR VIRTUAL DESIGN AND/OR FABRICATION OF THE DRILL TEMPLATE
GABARIT DE PERÇAGE DESTINÉ À EFFECTUER UN PERÇAGE D'IMPLANT POUR UN IMPLANT DENTAIRE ET MÉTHODE DE CONCEPTION VIRTUELLE ET/OU DE FABRICATION DUDIT GABARIT DE PERÇAGE

(30) Priorität: 10.10.2018 DE 102018007982
(43) Veröffentlichungstag der Anmeldung: 18.08.2021
(73) Patentinhaber: Exocad GmbH, 64293 Darmstadt (DE)
(72) Erfinder: LÖB, Andreas, 64293 Darmstadt (DE); PRAGER, Michael, 64293 Darmstadt (DE); RÜHL, Sebastian, 64293 Darmstadt (DE); SCHNITZSPAN, Paul, 64293 Darmstadt (DE)
(74) Vertreter: Richardt Patentanwälte PartG mbB
(86) Internationale Anmeldenummer: PCT/DE2019/100876
(87) Internationale Veröffentlichungsnummer: WO 2020/074045

(56) Entgegenhaltungen:
- FR-A1- 3 058 311
- KR-B1- 100 852 572
- KR-B1- 101 959 774
- US-A1- 2013 280 673
- US-A1- 2017 112 592

## Beschreibung

### Technisches Gebiet

Die Erfindung betrifft eine Bohrschablone zur Durchführung einer Implantatbohrung für ein dentales Implantat, mit einer Durchgangsöffnung und zumindest einem Durchbruch. Hierzu ist die Bohrschablone zur Auflage bzw. Anlage an einen Kiefer, Gaumen und/oder einen oder mehrere Zähne vorgesehen bzw. anlegbar und ist an die Geometrie des Kiefers, Gaumens und/oder einen oder mehrere Zähne zumindest teilweise angepasst. Die Durchgangsöffnung ist zur Führung eines Bohrers, insbesondere eines Dentalimplantatbohrers, und/oder zum Einsetzten einer Führungshülse für einen Bohrer vorgesehen, und der Durchbruch zur Durchleitung eines Fluides vorgesehen.

Ferner betrifft die Erfindung ein Verfahren zum virtuellen Entwurf und/oder Herstellung einer Bohrschablone zur Durchführung einer Implantatbohrung für ein dentales Implantat.

### VERWANDTER STAND DER TECHNIK

Aus dem Stand der Technik sind bereits unterschiedliche Bohrschablonen im Bereich der zahnärztlichen Implantologie und auch Verfahren zu der Herstellung einer Bohrschablone bekannt.

Im Wesentlichen beruhen diese Verfahren darauf, dass der Kiefer bzw. die Kieferoberfläche, insbesondere auch der Gaumen und/oder ein oder mehrere Zähne eines Patienten mit einem Negativabdruck oder mit einem bildgebenden computerunterstützen Verfahren dreidimensional (3D) erfasst wird.

Darüber hinaus sind digitale dreidimensionale Abformverfahren unter Verwendung von intraoralen 3D-Scannern bekannt, wobei derzeit alle am Markt befindlichen Systeme mit lichtoptischen Erfassungstechnologien arbeiten. Beispielsweise sind Systeme bekannt, die auf einem Triangulationsverfahren oder auf konfokaler Abbildung beruhen. Darüber hinaus sind auch andere physikalische Erfassungsmethoden in der Diskussion, beispielsweise die Sonographie, die Erfassung mittels Magnetresonanztomographie, mittels Computertomographie oder mittels digitaler Volumentomographie.

Mit dem dreidimensional bildgebenden Verfahren wird, insbesondere der Mundraum des Patienten zumindest bereichsweise aufgenommen und zu einem Datensatz verarbeitet, wobei die Position und die Orientierung des Implantats zum Mundraum oder die Positionen und die Orientierungen des/der Implantate zum Mundraum und/oder zueinander erfasst werden.

Anhand dieser Erfassung, insbesondere aus dem hieraus erzeugten Datensatz, kann dann unter dreidimensionaler (3D)-Visualisierung, das Setzten der Implantate in den Kiefer des Patienten geplant werden. Die Implantatplanung eines oder mehrere Implantate ist Voraussetzung für die Bestimmung benötigter Durchgangsöffnung in der noch zu modellierenden Bohrschablone. Dies geschieht in der Regel mit einer Visualisierungssoftware, bevorzug kommt dabei ein CAD-CAM-Verfahren ("Computer Aided Design" - rechnerunterstütztes Konstruieren - und "Computer Aided Manufacturing" - rechnerunterstützte Fertigung), zum Einsatz.

Anschließend wird ein Bohrschema bzw. eine zugehörige Bohrschablone ebenfalls virtuell entworfen und insbesondere mittels einem generischen Herstellungsverfahren wie dem Laser-Sinterverfahrens, beispielhaft beschrieben in der EP 1021 997 A1, oder der Stereolithographie, beispielhaft beschrieben in der WO 97/29901 A1 hergestellt. Kommen geeignete Materialien für dentale Medizinprodukte zur Anwendung, gibt es auch keinen Anlass die angeführten generischen Herstellungsverfahren zu kritisieren.

Die zuvor erfassten anatomischen Gegebenheiten bzw. der daraus erzeugte Datensatz umfasst neben anderen Daten auch, die Positionsdaten des zu setzenden Implantats, welche zum Beispiel in Beziehung zu unterschiedlichen Strecken, Flächen, Netzten, kartesischen und/oder Winkelkoordinaten stehen, und bevorzugt in Zuordnung zu dieser Erfassung gespeichert werden.

Wie bereits angemerkt, ist die Position des Implantats, als auch die Ausrichtung, Voraussetzung bei dem Entwurf des virtuellen Modelles der Bohrschablone. Ein oder mehrere Implantate werden in der Bohrschablone mit einer Durchgangsöffnung berücksichtigt. Die Durchgangsöffnung ist hierbei zur Führung eines Bohrers, insbesondere eines Dentalimplantatbohrers, und/oder zum Einsetzten einer Führungshülse für einen Bohrer vorgesehen ist. Mit dem Bohrer wird eine Bohrung im Kieferknochen eines Patienten gesetzt um anschließend in das resultierende Bohrloch ein Implantat einzubringen. Eine derartige Vorgehensweise ist bereits aus der DE 10 2016 004 641 A1 bekannt.

Um eine sichere Verankerung und Einheilung des Implantats im Kiefer bzw. Kieferknochen zu gewährleisten, ist es notwendig den Bohrvorgang zur Aufbereitung des Implantatbetts ohne einen schädigenden Temperaturanstieg im Knochen durchzuführen, welcher durch die Bohrreibung verursacht werden kann.

Um dementsprechend einen unzulässig hohen Temperaturanstieg zu vermeiden wird ein Kühlmittel, insbesondere Wasser oder eine Kochsalzlösung von der Seite auf den Bohrer gespritzt, oder durch den Bohrerschaft möglichst direkt auf die Kontaktfläche zwischen Bohrer und Knochen geleitet, wie in der DE 100 24 724 A1 vorgeschlagen.

Allerdings ist die notwendige Kühlung nur während des Bohrbetriebs vorhanden und die Kühlwirkung entfällt, wenn das Bohrinstrument und damit auch der Bohrer aus der Bohrschablone herausgenommen werden muss, zum Beispiel um Speichel, Blut und Abriebpartikel aus dem Bohrloch zu entfernen oder bei einem Wechsel des Bohrers selbst. Aus der EP 0 774 238 A1 ist eine Bohrschablone bekannt, von der diese Erfindung ausgeht, welche das Kühlen sowie das Entfernen von Speichel, Blut und Abriebpartikel während des Bohrbetriebs verbessern soll. Hierzu weist die Bohrschablone eine seitliche Aussparung in der Bohrschablone auf, welche auch den Bohrkanal lateral aufbricht und somit einen Auslass für ein eingebrachtes Kühlmittel, sowie Speichel, Blut und Abriebpartikel ausbildet.

Die US 2013/280673 A1 offenbart eine Bohrschablone nach dem Oberbegriff von Anspruch 1.

Der vorbekannte Stand der Technik bringt jedoch die Problematik mit sich, dass sich das Kühlmittel zusammen mit Speichel, Blut und Abriebpartikel in dem Rachenraum des Patienten ansammelt. Die hierdurch ausgelösten Schluckreflexe, mitunter auch einen Würgereiz, sind für den Patienten, sowie den Behandelnden höchst unangenehm, und Beeinträchtigen ein präzises Vorgehen während der Behandlung.

Die Behandlung, insbesondere der Bohrvorgang, muss dann zum Zwecke des Absaugens des Kühlmittels zusammen mit Speichel, Blut und Abriebpartikeln häufig unterbrochen werden, was die Dauer der Behandlung verlängert und dementsprechend auch die Kosten erhöht.

Die Absaugung wird in den meisten Fällen durch Hilfspersonal übernommen und mit sogenannten Speichelsaugern welche an Absauganlagen angeschlossen sind durchgeführt.

Es ist daher eine Aufgabe der Erfindung, die Eingangs genannte Bohrschablone nun derart auszugestalten und weiterzubilden, dass das Bohren als Vorbereitung zum Setzen eines Implantats auf eine einfachere, schnellere und kostengünstigere Art und Weise erfolgen kann, wodurch sich Vorteile für den Patienten erschließen, nämlich insbesondere eine verkürzte Behandlungsdauer und eine komfortablere Behandlung an sich, sowie auch Vorteile für die behandelnden Zahnärzte, nämlich geringere resultierende Kosten und einen erhöhte Patientenzufriedenheit.

Ferner ist es Aufgabe der Erfindung, ein Verfahren bereitzustellen, mit dem ein virtueller Entwurf und/oder die Herstellung einer Bohrschablone durchführbar ist.

### Offenbarung der Erfindung

Zur Lösung dieser Aufgabe dient die Bohrschablone mit den Merkmalen des Patentanspruchs 1 und das Verfahren mit den Merkmalen des Patentanspruchs 14. Vorteilhafte Ausführungsformen der Bohrschablone und des Verfahrens sind in den Unteransprüchen aufgeführt.

Die Bohrschablone ist nunmehr so ausgebildet, dass die Bohrschablone ein fluidführendes Element aufweist, wodurch eine permanente Absaugung vorgenommen werden kann und eine Ansammlung von Kühlmittel zusammen mit Speichel, Blut und Abriebpartikel in dem Rachenraum eines Patienten verhindert oder zumindest gemindert werden.

Erfindungsgemäß wird durch das Absaugen ein permanent anliegender Unterdruck zwischen der Bohrschablone und dem Kiefer bzw. Gaumen erzeugt, wodurch die Bohrschablone eine zusätzliche Haftung am Kiefer bzw. Gaumen erfährt und somit auch, bei nicht vorhandener manueller Fixierung durch den Behandelnden, sicher in der vorgesehenen Sollposition auf dem Kiefer des Patienten verbleibt.

Hierzu können ferner auch mehrere fluidführende Elemente vorgesehen sein, um die Absaugwirkung und/oder die Haftung zu verstärken.

Ferner kann auch ein fluidführendes Element zum Einbringen eines Fluides in die Bohrschablone, insbesondere im Wesentlichen in die Nähe des Implantatbetts bzw. des Bohrlochs vorgesehen sein.

Hierdurch kann eine ununterbrochene Kühlung des Implantatbetts ohne einen traumatisierenden Temperaturanstieg im Knochen sichergestellt werden, auch wenn kein mit dem Bohrinstrument gekoppeltem Kühlmittelstrom vorhanden ist bzw. der Bohrer aus der Bohrschablone herausgenommen wurde.

Als Kühlmittel, kann insbesondere auch ein gasförmiges Fluid über das zusätzliche fluidführende Element eingebracht werden, welches schmerzlindernd für den Patienten wirksam ist und wodurch auch eine Ansammlung von weiterem Kühlmittel im Rachenraum vermieden wird.

Weiterhin wird die zuvor aufgezeigte Aufgabe - für das Verfahren - nun zunächst dadurch gelöst, dass insbesondere die Position bzw. Lage und Ausrichtung der Durchgangsöffnung und des Durchbruchs und des fluidführenden Elements, insbesondere der Verlauf, unter Berücksichtigung der in der virtuellen Implantatplanung festgelegten Position bzw. Lage und Ausrichtung des Implantats bei dem virtuellen Entwurf und/oder Herstellung der Bohrschablone berücksichtigt wird.

Die eingangs genannten Nachteile sind daher vermieden und entsprechende Vorteile sind erzielt.

Es gibt nun eine Vielzahl von Möglichkeiten die erfindungsgemäße Bohrschablone bzw. das erfindungsgemäße Verfahren in vorteilhafter Art und Weise auszugestalten und weiterzubilden. Hierfür darf zunächst auf die dem Patentanspruch 1 bzw. dem Patentanspruch 14 nachgeordneten Patentansprüche verwiesen werden. Die abhängigen Ansprüche betreffen jeweils bevorzugte Ausführungsformen.

In einer Ausgestaltung der Bohrschablone weist das fluidführende Element einen Einlass und einen Auslass auf, wobei das fluidführende Element durch den Einlass fluidisch wirksam mit dem Durchbruch verbunden bzw. verbindbar ist, wodurch in die unmittelbare Umgebung des Implantatbetts ein Fluid zu- oder abgeführt werden kann. Zudem können auch Bohrrückstände wie z. B. Knochensplitter entfernt, insbesondere abgesaugt werden. Zusätzlich ist es von Vorteil, wenn der Durchbruch eine bestimmte Ausrichtung hat, sodass dieser einfach an das fluidführende Element angeformt werden oder das fluidführende Element einfach durch den Durchbruch hindurchgeführt werden kann, ohne eine Einschnürung auszubilden.

Zur zusätzlichen Verbesserung des Patientenkomforts trägt bei, dass der Auslass des fluidführenden Elements im Wesentlichen zur Mundöffnung (Labial) oder alternativ zur Wange (Bukkal), ausgerichtet ist. Dies ist besonders platzsparend und lässt somit auch mehr Raum zum Führen des Bohrinstruments.

Dadurch, dass das fluidführende Element einen röhrenförmigen oder einen flachrechteckförmigen Querschnitt aufweist, kann das fluidführende Element einfach an einer der Wandungen der Bohrschablone angeformt werden, oder ist alternativ integraler Bestandteil der Bohrschablone. Besonders bevorzugt ist eine Ausbildung des fluidführenden Elements, in der dieses teilweise oder vollständig unterhalb der Oberfläche bzw. der Wandung der Bohrschablone, somit gar nicht oder nicht vollständig sichtbar, vorgesehen ist. Hierzu kann das fluidführende Element in/auf der Wangenseite, im Zahnbereich nach außen ausgerichtete (vestibuläre) äußeren Wandung verlaufen, wie auch in/an der zu dem Mundinnenraum (im Zahnbereich nach innen, oral) ausgerichteten inneren Wandung, wie auch zur Schlussbisslinie ausgerichteten (okklusale) oberen Wandung, wobei das fluidführende Element zumindest teilweise an und/oder in einer der Wandungen vorgesehen ist, bzw. integral mit einer der Wandungen ausgebildet ist.

Erfindungsgemäß weist die Bohrschablone eine Kavität auf, welche durch die äußere Wandung und innere Wandung umschlossen bzw. ausgebildet wird. Hierzu sind die innere und die äußere Wandung bis zur Auflage an die Gingiva ausgebildet und dichten die Kavität gegenüber dem Rachenraum ab. Da die Kavität zudem mit der Durchgangsöffnung fluidisch wirksam verbunden ist, wird hierdurch eine Art "Sammelraum" in der Bohrschablone bereitgestellt. In dem Sammelraum werden insbesondere die Bohrrückstände wie zum Beispiel Knochensplitter aufgenommen, wenn diese auf Grund ihrer Größe nicht absaugbar sind und das fluidführende Element in Folge dessen verstopfen würden. Um bereits den Eintritt von großen Bohrrückständen in das fluidführende Element zu verhindern ist es vorstellbar, zwischen dem Einlass des fluidführenden Elements und dem Durchbruch einen Filter oder ein gitterartiges Element anzuordnen.

Um eine ausreichende Saugwirkung am Einlass des fluidführenden Elements zu erzielen, ist es vorgesehen am Auslass des fluidführenden Elements einen Anschluss für die Absaugung durch eine handelsübliche dentale Absauganlage anzubringen. Der Anschluss bzw. die Anschlussgeometrie der externen Absauganlage kann hierzu bereits während dem virtuellen Entwurf zur Herstellung der Bohrschablone berücksichtigt werden und aus einem Katalog bzw. einer in der CAD/CAM-Software hinterlegten Datenbank von herstellerspezifischen Anschlussgeometrien ausgewählt werden.

Der anfänglich vorhandene virtuelle Entwurf der Bohrschablone weist zur Berechnung bzw. Festlegung des fluidförmigen Elementes zumindest eine Einlasskoordinate KE des Einlasses, und eine Austrittskoordinate KA des Auslasses, sowie einen Schnittverlauf S auf, wobei der Schnittverlauf S die Einlasskoordinate KE und die Austrittskoordinate KA linienförmig miteinander verbindet. Insbesondere ist Schnittverlauf S als sogenannter Spline ausgebildet. Vorzugsweise wird der Schnittverlauf und somit im Endeffekt auch das fluidführende Element automatisch berechnet und in den Entwurf der Bohrschablone integriert. Hierzu wird der Schnittverlauf bzw. der Verlauf unter Berücksichtigung der in der virtuellen Implantatplanung festgelegten Position bzw. Lage und Ausrichtung des Implantats geplant. Insbesondere kann auch die Einschubrichtung des Implantats berücksichtigt werden. Ferner werden auch sogenannte "Sichtfenster", "Stege" und die "lichte Weite" (Innendurchmesser) besonders an/in den gekrümmten Bereichen des fluidführenden Elements berücksichtigt. Es können auch noch weitere Koordinaten zur Bildung/Berechnung des Schnittverlaufs manuell eingefügt werden oder der Schnittverlauf bzw. der Verlauf des fluidführenden Elements kann gänzlich manuell entworfen werden. Vorzugsweise werden hierzu auf einer oder mehreren Wandungen bzw. auf der Oberfläche des virtuellen Entwurfs, zumindest die Einlasskoordinate KE und die Austrittskoordinate KA ausgewählt, wobei durch die Einlasskoordinate KE auch ein Teil eines Durchbruchs repräsentiert wird. Soll heißen, dass die Koordinaten, welche den Durchbruch abbilden, zumindest auch die Einlasskoordinate KE umfassen. Anschließend wird von einem CAD/CAM System aufgrund der ausgewählten Koordinaten der Schnittverlauf bzw. der Verlauf des fluidführenden Elements berechnet bzw. gebildet. Dies macht die nachfolgende Herstellung mit einem generischen Verfahren, besonders schnell und kosteneffizient.

In einer weiteren Ausführungsform, welche auch mittels einem generischen Fertigungsverfahren hergestellt werden kann, weist das fluidführende Element eine Verzweigung auf, insbesondere mehrere Verzweigungen, wobei jede Verzweigung einen zugehörigen Einlass aufweist. Das fluidführende Element kann hier auch mehr als einen Auslass aufweisen. Ferner kann das fluidführende Element auch einen variablen Innendurchmesser aufweisen, welcher die Anzahl der Verzweigungen und den damit verbundenen Druckverlust berücksichtigt. Hierdurch lassen sich an unterschiedlichen Stellen im Mundraum simultan bzw. gleichzeitig ein Fluid und/oder ein flüssiger und/oder ein fester Bohrrückstand aus dem Mundraum, insbesondere aus dem Implantatbett bzw. der Kavität entfernen.

In einer weiteren Aufführung ist es auch möglich, durch ein weiteres (zweites, drittes oder viertes) fluidführende Element ein Fluid in die Bohrschablone, insbesondere in die Nähe oder direkt zum Implantatbett bzw. zur Bohrung einzubringen. Hierdurch kann eine dauerhafte Kühlung und/oder eine dauerhafte Spülung des Implantatbetts gewährleistet werden, ohne dass es einen Fluidstrom durch das Bohrinstrument benötigt. Besonders bevorzugt kann hierzu ein gasförmiges Fluid in die Nähe oder direkt zum Implantatbett bzw. zur Bohrung eingebracht werden.

In einer weiteren Ausführung, kann ferner die Bohrschablone auch einen sogenannten "Steg" aufweisen. Durch den Steg soll die Bohrschablone an sich strukturell verstärkt werden und/oder eine zusätzliche Auflage am Kiefer des Patienten ausbilden. Vorteilhafterweise kann auch der sogenannte Steg als ein fluidführendes Element ausgebildet sein oder das fluidführende Element ist zumindest teilweise als integraler Bestandteil eines Stegs ausgebildet, was die Bohrschablone strukturell verstärkt.

Im Folgenden sollen nun mehrere bevorzugte Ausführungsbeispiele der Erfindung anhand der nachfolgenden Zeichnung und der zugehörenden Beschreibung näher erläutert werden.

### KURZBESCHREIBUNG DER FIGUREN

In der Zeichnung zeigt:
Fig. 1 in schematischer drei dimensionaler Darstellung die erfindungsgemäße Bohrschablone, nämlich mit Sicht auf die wangenwärts ausgerichtete (vestibuläre) äußere Wandung und die zur Schlussbisslinie ausgerichtete (okklusale) obere Wandung, und
Fig. 2 in schematischer drei dimensionaler Darstellung die erfindungsgemäße Bohrschablone von unten, nämlich insbesondere mit Sicht auf die Auflagefläche, und
Fig. 3 in schematischer drei dimensionaler Darstellung die erfindungsgemäße Bohrschablone, nämlich von vorne, und
Fig. 4 in schematischer drei dimensionaler Darstellung die erfindungsgemäße Bohrschablone, nämlich perspektivisch von der Seite mit einem weiteren fluidführenden Element, und
Fig. 5 einen vergrößerten Ausschnitt der in Fig. 4 dargestellten Bohrschablone von unten, mit einer Verzweigung, und
Fig. 6 einen schematischeren Ablauf um einen virtuellen Entwurf einer erfindungsgemäßen Bohrschablone zu generieren und/oder die Herstellung einer erfindungsgemäßen Bohrschablone zur Durchführung einer Implantatbohrung für ein dentales Implantat durchzuführen.

### BESCHREIBUNG DER BEVORZUGTEN AUSFÜHRUNGSFORM

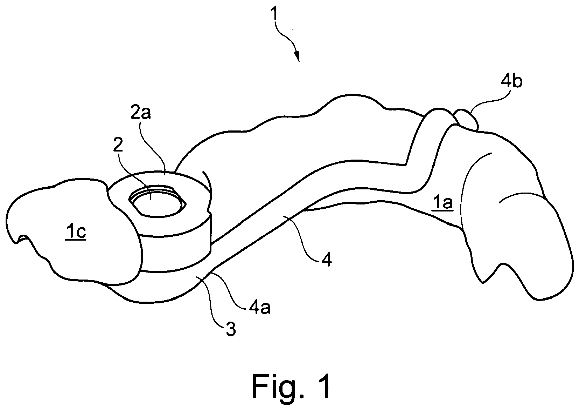

Bevor nun auf die entsprechenden Verfahrensschritte näher im Einzelnen eingegangen wird, darf im Folgenden anhand der Fig. 1 zunächst auf die Bohrschablone 1 bzw. deren wesentlichen Komponenten näher eingegangen werden:

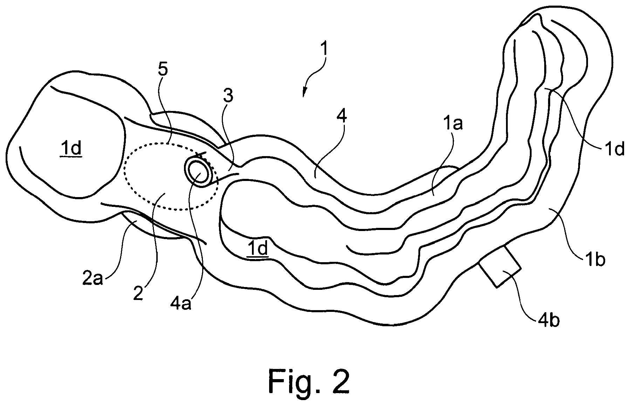

Die Fig. 1 zeigt eine Bohrschablone 1 zur Durchführung einer Implantatbohrung für ein dentales Implantat (nicht dargestellt), mit einer Durchgangsöffnung 2 und zumindest einem Durchbruch 3 (nicht zeichnerisch sichtbar, s. a. Fig. 2). Die Durchgangsöffnung 2 ist zur Führung eines Bohrers (nicht dargestellt), insbesondere eines Dentalimplantatbohrers, und/oder zum Einsetzten einer Führungshülse (nicht dargestellt) für einen Bohrer vorgesehen. Um eine ausreichende Stabilität der Bohrschablone 1 während des Bohrvorgangs zu gewährleisten ist um die Durchgangsöffnung 2 ein Verstärkungsbereich 2a vorgesehen. Vorzugsweise ist der Verstärkungsbereich 2a ring- oder zylinderförmig ausgeführt. Gut zu erkennen ist auch, dass die Bohrschablone 1 zur Auflage bzw. Anlage an einen Kiefer, Gaumen und/oder einen oder mehrere Zähne (nicht dargestellt) vorgesehen ist bzw. anlegbar ist und an die Geometrie des Kiefers, Gaumens und/oder einen oder mehrere Zähne zumindest teilweise angepasst ist. Dementsprechend ist auch die Auflagefläche 1d (in der Darstellung nicht sichtbar, s. a. Fig. 2) ausgeformt um einen exakten Sitz der Bohrschablone 1 zu gewährleisten. Der Durchbruch 3 ist zur Durchleitung eines Fluides, insbesondere zur Absaugung eines Kühlmittels zusammen mit Speichel, Blut und Abriebpartikeln unterhalb des Verstärkungsbereichs 2a positioniert und fluidisch wirksam mit einem fluidführenden Element 4 verbunden. Hierzu ist der Einlass 4a des fluidführenden Elements 4 um den Durchbruch 3 dichtend und fluidisch wirksam angelegt oder das fluidführenden Elements 4 reicht durch den Durchbruch 3 hindurch und endet unterhalb Verstärkungsbereichs 2a, sodass der Einlass 4a dort freiliegt (s. a. Fig. 2). Je nach Ausrichtung des Durchbruchs 3, wobei die Ausrichtung auf Grundlage eines Richtungsvektors bestimmt bzw. berechnet, insbesondere wird der Richtungsvektor mit zumindest einer Implantat-(Referenz)-Koordinate KI bestimmt bzw. berechnet, kann der Durchbruch 3 und somit auch der den Durchbruch 3 umgebende Einlass 4a des fluidführenden Elements 4 eine fluidisch optimierte Ausrichtung einnehmen. Ferner ist das fluidführende Element 4 in dieser Darstellung röhrenförmig dargestellt. Alternative ist aber auch ein flach-rechteckförmiger Querschnitt denkbar. Gut sichtbar ist auch, dass der Auslass 4b des fluidführenden Elements 4, welcher grundsätzlich im Wesentlichen zur Mundöffnung (nicht sichtbar) (Labial) ausgerichtet bzw. positioniert ist und zum Anschluss für ein externes Absauggerät (nicht dargestellt) zur Absaugung eines Fluides und/oder eines flüssigen und/oder festen Bohrrückstands vorgesehen ist. Ferner ist auch erkennbar, dass die Bohrschablone 1 eine zum Mundinnenraum (orale) ausgerichtete innere Wandung 1a, eine zur Schlussbisslinie ausgerichtete (okklusale) obere Wandung 1c, und eine wangenwärts, im Zahnbereich nach außen ausgerichtete (vestibuläre) äußere Wandung 1b aufweist (s. a. Fig. 2), wobei das fluidführende Element 4 zumindest teilweise an und/oder in der inneren Wandung 1a vorgesehen ist, bzw. integral mit der inneren Wandung 1a, sowie der äußeren Wandung 1b, sowie der oberen Wandung 1c ausgebildet ist.

Die Fig. 2 zeigt nun eine schematische drei dimensionale Darstellung der erfindungsgemäßen Bohrschablone 1 aus Fig. 1 von unten, nämlich mit Sicht auf die von den Wandungen 1a, 1b, 1c umschlossene Auflagefläche 1d. Gut dargestellt ist insbesondere, dass die äußere Wandung 1a und innere Wandung 1c eine Kavität 5 (gepunktete Linie) umschließen, wobei die Kavität 5 mit der Durchgangsöffnung 2 fluidisch wirksam verbunden ist und zumindest teilweise unterhalb des Verstärkungsbereich 2a ausgebildet ist. Erkennbar ist auch, dass die Kavität 5 eine fluidisch wirksam Verbindung zu dem Durchbruch 3 und somit auch zu dem Einlass 4a aufweist. Vorstellbar ist auch, dass zwischen dem Einlass 4a des fluidführenden Elements 4 und dem Durchbruch 3 ein Filter oder ein gitterartiges Element (nicht dargestellt) angeordnet ist um ein Eindringen von Knochensplittern in das fluidführende Element 4 zu verhindern.

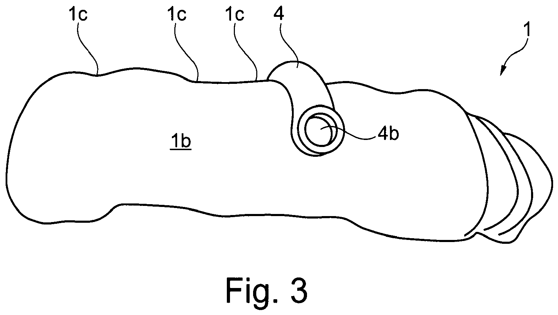

Der Auslass 4b ist auch in dieser Darstellung im Wesentlichen zur Mundöffnung (nicht sichtbar) (Labial) ausgerichtet. Die labiale Ausrichtung des Auslasses 4b ist noch mal in der Fig. 3 verbessert zu sehen. Hier ist die Bohrschablone aus Fig. 1 in schematischer drei dimensionaler Darstellung, nämlich mit einer Sicht von vorne zu erkennen. Eine Ausrichtung zur Mundöffnung hin vereinfacht zudem den Anschluss eines Absaugaggregats (nicht dargestellt). Gut sichtbar ist auch das sich das fluidführende Element 4 von der inneren Wandung 1a (nicht sichtbar, s. a. Fig. 1), über die Schlussbisslinie bzw. die nach dieser ausgerichteten (okklusale) obere Wandung 1c, bis zur vestibulären, insbesondere labialen, nach außen ausgerichteten äußeren Wandung 1b erstreckt.

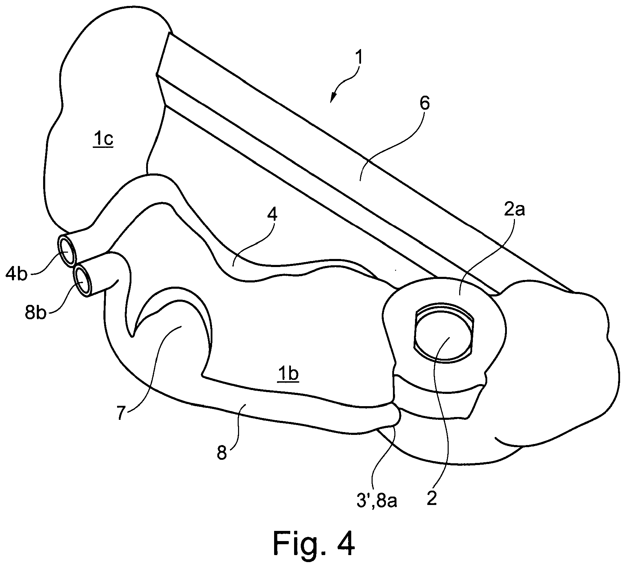

In der Fig. 4 nun eine schematische drei dimensionale Darstellung der erfindungsgemäßen Bohrschablone 1 aus Fig. 1 und Fig. 2 mit einem weiteren fluidführenden Element 8 skizziert. Wie auch das fluidführende Element 4, umfasst das fluidführende Element 8 einen Einlass 8a, welches um einen Durchbruch, nämlich dem den Durchbruch 3' dichtend und fluidisch wirksam angeformt ist, oder das fluidführenden Elements 8 reicht durch den Durchbruch 3' hindurch und endet unterhalb Verstärkungsbereichs 2a, sodass der Einlass 8a dort freiliegt. Wie der Durchbruch 3, weist auch der Durchbruch 3', eine vorbestimmte Ausrichtung auf.

Ferner ist das fluidführende Element 8 in dieser Darstellung ebenso röhrenförmig dargestellt. Alternative ist aber auch ein flach-rechteckförmiger Querschnitt denkbar. Gut sichtbar ist auch, dass der Auslass 8b des fluidführenden Elements 8, im Wesentlichen zur Mundöffnung (nicht sichtbar) (Labial) ausgerichtet bzw. positioniert ist und auch zum Anschluss für ein externes Absauggerät (nicht dargestellt) zur Absaugung eines Fluides und/oder eines flüssigen und/oder festen Bohrrückstands vorgesehen ist. Um den Auslass 4a und 8a zusammen zu führen sind unterschiedliche Adapter für ein Absaugaggregat denkbar. Gut erkennbar ist, dass das fluidführende Element 8 zumindest teilweise an und/oder in der äußeren Wandung 1b ausgebildet ist. Wie auch der Einlass 4a ist der Einlass 8a unterhalb des Verstärkungsbereichs 2a positioniert und über den Durchbruch 3' mit der Kavität 5 fluidisch wirksam verbunden bzw. verbindbar. Erkennbar ist auch dass ein Sichtfenster 7 zur optischen Überprüfung der Position in der Bohrschablone 1 vorhanden ist, wobei der Verlauf des fluidführenden Elements die Position des Sichtfensters 7 berücksichtigt. Ebenso ist auch ein Steg 6 sichtbar, welcher zur strukturellen Verstärkung der Bohrschablone beiträgt und auch zur Ausbildung weitere Auflageflächen 1d ausgebildet sein kann. Es ist auch denkbar, dass das fluidführende Element 4 integraler Bestandteil des Stegs 6 ist, wobei das fluidführende Element 4 auch komplett innerhalt des Stegs 6 verläuft. Alternativ kann das fluidführende Element 8, hier auch zum Einbringen eines Fluides, insbesondere eines gasförmigen Fluides vorgesehen sein. Hierdurch kann eine ununterbrochene Kühlung des Implantatbetts ohne einen traumatisierenden Temperaturanstieg im Knochen sichergestellt werden, auch wenn kein mit dem Bohrinstrument gekoppeltem Kühlmittelstrom vorhanden ist, bzw. der Bohrer aus der Bohrschablone herausgenommen wurde.

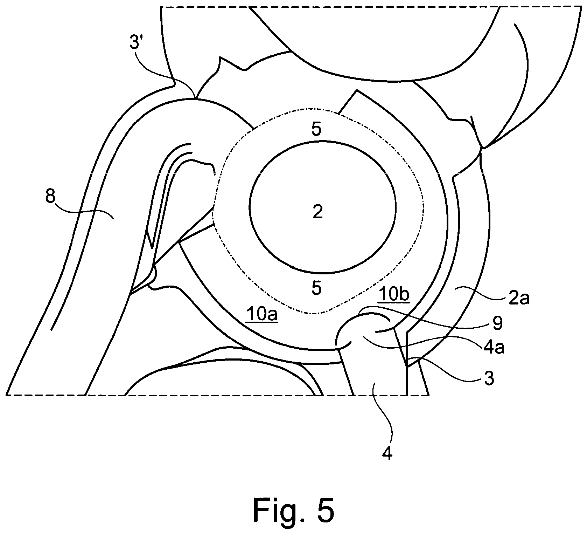

Die Fig. 5 zeigt nun eine bevorzugte Ausführungsform der in Fig. 4 dargestellten Bohrschablone 1. Insbesondere, ist hier eine vergrößerte Teilansicht um den Verstärkungsbereich 2a der Durchgangsöffnung 2 mit Sicht von unten skizziert. Um die Sicht, auf das zum Teil in der Borschablone liegende bzw. in die Bohrschablone 1 integrierte, fluidführende Elemente 4 und 8 zu ermöglichen, sind teilweise die äußere Wandung 1a und die innere Wandung 1c, sowie die Auflagefläche 1d aufgebrochen bzw. weggeschnitten. Unterhalb des Verstärkungsbereich 2a ist eine Kavität 5 (strichpunktierte Linie) vorgesehen.

Gut sichtbar, ist nun in der aufgebrochenen Ansicht der wesentliche Verlauf der fluidführenden Elementen 4 und 8 innerhalb der Bohrschablone 1. Insbesondere ist jetzt auch sichtbar, dass das fluidführenden Element 4 eine Verzweigung 9 aufweist.

Die Verzweigung 9 ist hier relativ einfach ausgeführt indem sie das fluidführende Element 4, insbesondere den Einlass 4a in zwei, innerhalb des Verstärkungsbereichs 2a, angeordnete Fortsätze 10a, 10b aufteilt. Es ist vorgesehen, dass über die Fortsätze 10a, 10b das Kühlmittel zusammen mit Speichel, Blut und Abriebpartikeln abgesaugt wird. Hierzu sind die Fortsätze 10a und 10b zu der unterhalb des Verstärkungsbereichs 2a vorgesehenen Kavität 5 offen ausgebildet und formen somit einen Ringraum ab. Der Ringraum ist somit auch in Flussrichtung nach dem Durchbruch 3 positioniert, wobei der Durchbruch mit dem fluidführenden Element dichtend abgeschlossen ist und somit auch die Kavität 5, wobei die Kavität 5 zu der Durchgangsöffnung fluidisch wirksam verbunden ist. Insbesondere liegt der Bereich um Kavität 5 mit der Auflagefläche 1d fluiddichtend auf dem Kiefer des Patienten, insbesondere auf der Gingiva auf bzw. an.

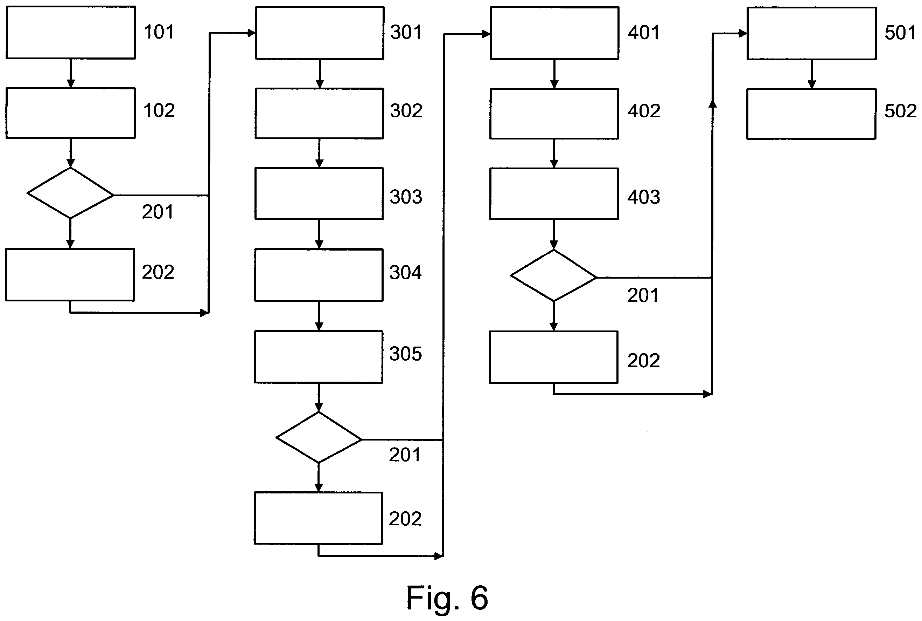

Im Folgenden darf mit Bezugnahme auf die Fig. 1 bis Fig. 5 und auf die Fig. 6, die entsprechenden Verfahrensschritte näher beschrieben werden:
Zunächst ist es bei der Bohrschablone 1 und dem Verfahren entscheidend, dass die Bohrschablone ein fluidführendes Element 4 aufweist, wobei der Verlauf des fluidführenden Elements 4 bei der Erzeugung des virtuellen Entwurfs der Bohrschablone 1 die in der virtuellen Implantatplanung festgelegten Position bzw. Lage und Ausrichtung des Implantats berücksichtigt. Ferner können auch die Position und Ausrichtung von sogenannten Stegen 6 und Sichtfernstern 7 berücksichtigt werden. Somit ist eine punktuell wirksame Absaugung realisierbar, welche auch zu einer strukturellen Verstärkung der Bohrschablone beitragen kann.

In der Ausgestaltung des Verfahrens zum virtuellen Entwurf und/oder Herstellung einer Bohrschablone 1 zur Durchführung einer Implantatbohrung für ein dentales Implantat, wird zunächst im Schritt 101 eine virtuelle Implantatplanung, insbesondere eine 3D-Implantatsplanung bereitgestellt. Anschließend wird im Schritt 102 ein Entwurf einer Bohrschablone 1 erzeugt, wobei insbesondere die Position bzw. Lage und Ausrichtung der Durchgangsöffnung 2 und des Durchbruchs 3 und des fluidführenden Elements 4, insbesondere der Verlauf, unter Berücksichtigung der in der virtuellen Implantatplanung festgelegten Position bzw. Lage und Ausrichtung des Implantats berücksichtigt wird. Es kann auch die Position und Ausrichtung eines Sichtfensters 7 und eines Steg 6 berücksichtigt werden (s. a. Fig. 4).

Das erfindungsgemäße Verfahren kann ferner auch die folgenden Verfahrensschritte umfassen, wobei insbesondere im Schritt 201 der virtuelle Entwurf der Bohrschablone 1 einem Benutzer zur Legitimierung vorgeschlagen wird, wodurch der Benutzer die Richtigkeit des Entwurfs nochmal bestätigt, bevor ein digitaler Datensatz der virtuellen Bohrschablone erzeugt wird, welcher dann an eine Vorrichtung übertragen wird, um ein physische Model zu erzeugen. Alternativ, kann der Benutzer den Vorschlag aber auch ablehnen Schritt 202, um Änderungen an dem virtuellen Entwurf der Bohrschablone 1 vorzunehmen, insbesondere die Position bzw. Lage und Ausrichtung der Durchgangsöffnung 2 und des Durchbruchs 3 und des fluidführenden Elements 4, insbesondere der Verlauf des fluidführenden Elementes 4.

Der Verlauf des fluidführenden Elements 4 (oder auch 8) kann mit folgenden Verfahrensschritten einfach als Entwurf festgelegt werden, wobei als Schritt 301 eine Verbindungsgerade V1 berechnet wird, welche eine vorherbestimmte Einlasskoordinate KE des Einlasses und eine vorherbestimmte Austrittskoordinate KA des Auslasses miteinander verbindet. Ferner wird im Schritt 302 analog eine Verbindungsgerade V2 auf der Grundlage einer vorherbestimmten Einlasskoordinate KE des Einlasses und einer Implantats-(Referenz)Koordinate KI berechnet bzw. bestimmt. Im Schritt 303 kann nun eine Ebene E1, welche zumindest die Verbindungsgerade V1 und V2 umfasst, berechnet bzw. aufgespannt bzw. festlegt werden. Als Schritt 304 wird nun der Schnittverlauf S der Ebene E1 mit der äußeren Wandung und/oder inneren Wandung und/oder oberen Wandung der Bohrschablone bestimmt bzw. berechnet und im Schritt 305 auf dieser Grundlage ein fluidführendes Element 4 um den Schnittverlauf S erzeugt. Das fluidführende Element kann hierzu röhrenförmig oder einen flach-rechteckförmigen Querschnitt aufweisen. Es ist auch denkbar, dass das fluidführende Element 4 einfach an einer der Wandungen der Bohrschablone angeformt ist oder als Alternative ein integraler Bestandteil der Bohrschablone 1 ist. Wie bereits erläutert, kann auch hier nochmal der Verfahrensschritt 201 durchgeführt werden, wobei einem Benutzer das zuvor erzeugte bzw. geänderte virtuelle Modell zur Legitimierung vorgeschlagen wird und wodurch der Benutzer die Richtigkeit des Entwurfs nochmal bestätigen muss, bevor ein digitaler Datensatz der virtuellen Bohrschablone erzeugt wird, welcher dann letztendlich an eine Vorrichtung übertragen wird um ein physisches Model zu erzeugen. Alternativ kann der Benutzer den Vorschlag aber auch ablehnen Schritt 202 um Änderungen an dem virtuellen Entwurf der Bohrschablone 1 vorzunehmen. Alternativ kann der Schnittverlauf S auch, wie in dem Verfahrensschritt 401 wiedergegeben, durch das bestimmen von einzelnen Verlaufspunkten Pi auf der Oberfläche des virtuellen Entwurfs der Bohrschablone 1, insbesondere der Einlasskoordinate KE des Einlasses und der Austrittskoordinate KA des Auslasses zumindest teilweise vorgegeben werden. Im Verfahrensschritt 402 werden anschließend einzelne Verbindungslinien Vi zwischen den Verlaufspunkten Pi erzeugt, wobei die Verbindungslinien Vi auf die Oberfläche des virtuellen Entwurfs der Bohrschablone 1 projiziert werden und somit den Schnittverlauf S abbilden. Auf dieser Grundlage wird nun im Verfahrensschritt 403 ein fluidführendes Element 4 um den Schnittverlauf S erzeugt. Das fluidführende Element 4 kann hierzu röhrenförmig oder einen flach-rechteckförmigen Querschnitt aufweisen. Es ist auch denkbar, dass das fluidführende Element 4 einfach an einer der Wandungen der Bohrschablone angeformt ist oder als Alternative ein integraler Bestandteil der Bohrschablone 1 ist. Auch hier kann nochmals der Verfahrensschritt 201 durchgeführt werden, wobei einem Benutzer das zuvor erzeugte bzw. geänderte virtuelle Modell zur Legitimierung vorgeschlagen wird und wodurch der Benutzer die Richtigkeit des Entwurfs nochmal bestätigen muss, bevor ein digitaler Datensatz der virtuellen Bohrschablone 1 erzeugt wird, welcher dann letztendlich an eine Vorrichtung übertragen wird um ein physisches Model zu erzeugen. Alternativ kann der Benutzer den Vorschlag aber auch ablehnen Schritt 202 um Änderungen an dem virtuellen Entwurf der Bohrschablone 1 vorzunehmen. Abschließend wird im Verfahrensschritt 501 zumindest ein digitaler Datensatz der virtuellen Bohrschablone 1 erzeugt und auf dessen Grundlage im Verfahrensschritt 502 eine physische Bohrschablone mit Hilfe eines generativen Fertigungsverfahrens.

Im Ergebnis sind die eingangs genannten Nachteile vermieden und eine Vielzahl von Vorteilen realisiert.

### Bezugszeichenliste

- 1: Bohrschablone
- 1a: zum Mundinnenraum (oral) ausgerichtete innere Wandung
- 1b: wangenwärts ausgerichtete (vestibuläre) äußere Wandung
- 1c: zur Schlussbisslinie ausgerichtete (okklusale) obere Wandung
- 1d: Auflagefläche
- 2: Durchgangsöffnung
- 2a: Verstärkungsbereich
- 3: Durchbruch
- 4: fluidführendes Element
- 4a: Einlass
- 4b: Auslass
- 5: Kavität
- 6: Steg
- 7: Fenster
- 8: fluidführendes Element
- 8a: Einlass
- 8b: Auslass
- 9: Verzweigung
- 10a, 10b: Fortsatz

## Patentansprüche

1. Bohrschablone (1) zur Durchführung einer Implantatbohrung für ein dentales Implantat, mit einer Durchgangsöffnung (2) und zumindest einem Durchbruch (3), wobei die Bohrschablone zur Auflage bzw. Anlage an einen Kiefer, Gaumen und/oder einen oder mehrere Zähne vorgesehen ist bzw. anlegbar ist und an die Geometrie des Kiefers, Gaumens und/oder einen oder mehrere Zähne zumindest teilweise angepasst ist, wobei die Durchgangsöffnung (2) zur Führung eines Bohrers, insbesondere eines Dentalimplantatbohrers, und/oder zum Einsetzten einer Führungshülse für einen Bohrer vorgesehen ist, und wobei der Durchbruch (3) zur Durchleitung eines Fluides vorgesehen ist, wobei die Bohrschablone ein fluidführendes Element (4, 8) aufweist wobei das fluidführende Element (4, 8) zum Absaugen eines flüssigen und/oder festen Bohrrückstands vorgesehen ist,
**dadurch gekennzeichnet, dass** um die Durchgangsöffnung (2) ein Verstärkungsbereich (2a) vorgesehen ist, wobei unterhalb des Verstärkungsbereichs (2a) eine Kavität (5) ausgebildet ist, welche durch eine wangenwärts, vestibulär im Zahnbereich nach außen ausgerichtete äußere Wandung (1b) der Bohrschablone (1) und eine oral in den Mundinnenraum ausgerichtete innere Wandung (1a) umschlossen wird, wobei die innere und die äußere Wandung (1a, 1b) bis zur Auflage an die Gingiva ausgebildet sind und die Kavität (5) gegenüber dem Rachenraum abdichten, wobei die Kavität (5) eine fluidisch wirksame Verbindung zu dem Durchbruch (3) und der Durchgangsöffnung (2) aufweist, wobei die Kavität (5) einen Sammelraum zum Aufnehmen von Bohrrückständen bereitstellt,
wobei die Bohrschablone (1) für eine zusätzliche Haftung am Kiefer und/oder Gaumen ausgebildet ist zum Erzeugen eines permanent anliegenden Unterdrucks zwischen der Bohrschablone (1) und dem Kiefer bzw. Gaumen durch das Absaugen.

2. Bohrschablone nach Anspruch 1,
**dadurch gekennzeichnet, dass**
das fluidführende Element (4, 8) einen Einlass (4a, 8a) und einen Auslass (4b, 8b) aufweist, wobei das fluidführende Element (4, 8) durch den Einlass (4a, 8a) fluidisch wirksam mit dem Durchbruch (3, 3') verbunden bzw. verbindbar ist.

3. Bohrschablone nach Anspruch 1 oder 2,
**dadurch gekennzeichnet, dass**
die Ausrichtung des Durchbruchs (3, 3') auf Grundlage eines Richtungsvektors bestimmt bzw. berechnet wird.

4. Bohrschablone nach einem der Ansprüche 1 bis 3,
**dadurch gekennzeichnet, dass**
der Auslass (4b, 8b) des fluidführenden Elements im Wesentlichen zur Mundöffnung (Labial) oder zur Wange (Bukkal), ausgerichtet ist.

5. Bohrschablone nach einem der Ansprüche 1 bis 4,
**dadurch gekennzeichnet, dass**
das fluidführende Element (4, 8) röhrenförmigen oder einen flachrechteckförmigen Querschnitt aufweist.

6. Bohrschablone nach einem der Ansprüche 1 bis 5,
**dadurch gekennzeichnet,**
**dass** das fluidführende Element (4, 8) zumindest teilweise an und/oder in der äußeren Wandung (1b) vorgesehen ist, bzw. integral mit der äußeren Wandung (1b) ausgebildet ist.

7. Bohrschablone nach einem der Ansprüche 1 bis 6,
**dadurch gekennzeichnet,**
**dass** das fluidführende Element (4, 8) zumindest teilweise an und/oder in der inneren Wandung (1a) vorgesehen ist, bzw. integral mit der inneren Wandung (1a) ausgebildet ist.

8. Bohrschablone nach einem der Ansprüche 1 bis 7,
**dadurch gekennzeichnet, dass**
die Bohrschablone eine zur Schlussbisslinie ausgerichtete (okklusale) obere Wandung (1c) aufweist, wobei das fluidführende Element (4, 8) zumindest teilweise an und/oder in der oberen Wandung (1c) vorgesehen ist, bzw. integral mit der oberen Wandung (1c) ausgebildet ist.

9. Bohrschablone nach einem der Ansprüche 1 bis 8,
**dadurch gekennzeichnet, dass**
das fluidführende Element (4, 8) zumindest teilweise dem Verlauf der äußeren Wandung (1b) und/oder inneren Wandung (1a) und/oder der oberen Wandung (1c) folgend vorgesehen ist.

10. Bohrschablone nach einem der Ansprüche 1 bis 9,
**dadurch gekennzeichnet, dass**
das fluidführende Element (4, 8) zumindest teilweise die äußere Wandung (1b) und/oder innere Wandung (1a) und/oder obere Wandung (1c) umfasst bzw. umfassend erzeugt wird, bzw. integral mit der äußeren Wandung (1b) und/oder inneren Wandung (1a) und/oder oberen Wandung (1c) ausgebildet ist.

11. Bohrschablone nach einem der Ansprüche 1 bis 10,
**dadurch gekennzeichnet, dass**
zwischen dem Auslass (4b, 8b) des fluidführenden Elements (4) und dem Durchbruch ein Filter oder ein gitterartiges Element angeordnet ist.

12. Bohrschablone nach einem der Ansprüche 1 bis 11,
**dadurch gekennzeichnet, dass**
am Auslass (4b, 8b) des fluidführenden Elements (4, 8) Mittel zum Anschluss für die Absaugung eines Fluides und/oder eines flüssigen und/oder festen Bohrrückstands vorgesehen ist bzw. anbringbar sind.

13. Bohrschablone nach einem der Ansprüche 1 bis 12,
**dadurch gekennzeichnet, dass**
das fluidführende Element (4, 8) eine Einlasskoordinate KE des Einlasses (4a, 8a), und eine Austrittskoordinate KA des Auslasses (4b, 8b), sowie einen Schnittverlauf S aufweist, wobei der Schnittverlauf S die Einlasskoordinate KE und die Austrittskoordinate KA linienförmig miteinander verbindet, und/oder
dass das fluidführende Element (4, 8) eine Verzweigung (9) aufweist, insbesondere mehrere Verzweigungen, und/oder
dass die Bohrschablone ein weiteres fluidführendes Element (4, 8) aufweist, wobei das fluidführende Element (4, 8) zum Einbringen eines Fluides, insbesondere eines gasförmigen Fluides vorgesehen ist, und/oder
dass die Bohrschablone einen Steg (6) aufweist, wobei das fluidführende Element (4, 8) zumindest teileweise als integraler Bestandteil des Stegs (6) ausgebildet ist.

14. Verfahren zum virtuellen Entwurf und/oder Herstellung einer Bohrschablone zur Durchführung einer Implantatbohrung für ein dentales Implantat, nach einem der vorhergehenden Ansprüche 1 bis 13 umfassend folgende Verfahrensschritte:
- Bereitstellen einer virtuellen Implantatplanung, insbesondere einer 3D-Implantatsplanung,
- Erzeugen eines virtuellen Entwurfs einer Bohrschablone, wobei insbesondere die Position bzw. Lage und Ausrichtung der Durchgangsöffnung (2) und des Durchbruchs (3, 3') und des fluidführenden Elements (4, 8), insbesondere der Verlauf, unter Berücksichtigung der in der virtuellen Implantatplanung festgelegten Position bzw. Lage und Ausrichtung des Implantats berücksichtigt wird.

15. Verfahren nach Anspruch 14, ferner umfassend folgende Verfahrensschritte:
- Berechnen einer Verbindungsgerade V1 auf der Grundlage einer vorherbestimmten Einlasskoordinate KE des Einlasses und einer Austrittskoordinate KA des Auslasses,
- Berechnen einer Verbindungsgerade V2 auf der Grundlage einer vorherbestimmten Einlasskoordinate KE des Einlasses und einer Implantats-(Referenz)-Koordinate Kl,
- Berechnen bzw. Aufspannen bzw. Festlegen einer Ebene E1 welche die Verbindungsgerade V1 und V2 umfasst,
- Berechnen bzw. Bestimmen des Schnittverlaufs S der Ebene E1 mit der äußeren Wandung und/oder inneren Wandung und/oder oberen Wandung der Bohrschablone,
- Erzeugen eines fluidführenden Elements auf Grundlage des Schnittverlaufs S, und/oder
ferner umfassend folgende Verfahrensschritte:
- Bestimmen von einzelnen Verlaufspunkten Pi auf der Oberfläche des virtuellen Entwurfs der Bohrschablone, insbesondere der Einlasskoordinate KE des Einlasses und der Austrittskoordinate KA des Auslasses,
- Erzeugen von einzelnen Verbindungslinien Vi zwischen den Verlaufspunkten Pi, wobei die Verbindungslinien auf die Oberfläche des virtuellen Entwurfs der Bohrschablone projiziert werden und somit einen Schnittverlauf S abbilden,
- Erzeugen eines fluidführenden Elements auf Grundlage des Schnittverlaufs S, und/oder
ferner umfassend folgende Verfahrensschritte:
- Dass der virtuelle Entwurf der Bohrschablone einem Benutzer zur Legitimierung vorgeschlagen wird,
- Dass der Benutzer den Vorschlag ablehnen kann, um Änderungen an dem virtuellen Entwurf der Bohrschablone vorzunehmen, insbesondere die Position bzw. Lage und Ausrichtung der Durchgangsöffnung (2) und des Durchbruchs (3, 3') und des fluidführenden Elements (4, 8), insbesondere der Verlauf des fluidführenden Elementes, und/oder
ferner umfassend folgende Verfahrensschritte:
- Erzeugen von zumindest einem digitalen Datensatz der virtuellen Bohrschablone,
- Erzeugen einer physischen Bohrschablone mit Hilfe eines generativen Fertigungsverfahrens, auf Grundlage des digitalen Datensatzes.

## Claims

1. A drilling template (1) for drilling an implant for a dental implant, having a passage opening (2) and at least one breakthrough (3),
the drilling template being provided or being able to be placed to rest on a jaw, palate and/or one or more teeth and being at least partially adapted to the geometry of the jaw, palate and/or one or more teeth, the passage opening (2) being provided for guiding a drill, in particular a dental implant drill, and/or for inserting a guide sleeve for a drill, and the breakthrough (3) being provided for conducting a fluid, the drilling template comprising a fluid-carrying element (4, 8), the fluid-carrying element (4, 8) being provided for suctioning off a liquid and/or solid drilling residue,
**characterized in that** a reinforcement region (2a) is provided around the passage opening (2), wherein a cavity (5) is formed below the reinforcement region (2a) and is surrounded by an outer wall (1b) of the drilling template (1) directed outwards towards the cheek, vestibularly in the tooth region, and an inner wall (1a) directed orally into the interior of the mouth, wherein the inner and outer walls (1a, 1b) are designed to rest on the gingiva and seal the cavity (5) from the pharynx, wherein the cavity (5) comprises a fluidically active connection to the breakthrough (3) and the passage opening (2), wherein the cavity (5) provides a collection space for collecting drilling residues,
wherein the drilling template (1) is designed for additional adhesion to the jaw and/or palate for generating a permanently applied negative pressure between the drilling template (1) and the jaw or palate by suction.

2. The drilling template according to claim 1,
**characterized in that**
the fluid-carrying element (4, 8) comprises an inlet (4a, 8a) and an outlet (4b, 8b), wherein the fluid-carrying element (4, 8) is fluidically effectively connected or connectable to the breakthrough (3, 3') through the inlet (4a, 8a).

3. The drilling template according to claim 1 or 2,
**characterized in that**
the orientation of the breakthrough (3, 3') is determined or calculated on the basis of a direction vector.

4. The drilling template according to any one of claims 1 to 3,
**characterized in that**
the outlet (4b, 8b) of the fluid-carrying element is substantially aligned with the mouth opening (labial) or with the cheek (buccal).

5. The drilling template according to any one of claims 1 to 4,
**characterized in that**
the fluid-carrying element (4, 8) has a tubular or a flat-rectangular cross-section.

6. The drilling template according to any one of claims 1 to 5,
**characterized in**
**that** the fluid-carrying element (4, 8) is provided at least partially on and/or in the outer wall (1b), or is formed integrally with the outer wall (1b).

7. The drilling template according to any one of claims 1 to 6,
**characterized in**
**that** the fluid-carrying element (4, 8) is provided at least partially on and/or in the inner wall (1a), or is formed integrally with the inner wall (1a).

8. The drilling template according to any one of claims 1 to 7,
**characterized in that**
the drilling template comprises an (occlusal) upper wall (1c) aligned with the final bite line, wherein the fluid-carrying element (4, 8) is provided at least partially on and/or in the upper wall (1c) or is formed integrally with the upper wall (1c).

9. The drilling template according to any one of claims 1 to 8,
**characterized in that**
the fluid-carrying element (4, 8) is provided at least partially following the course of the outer wall (1b) and/or inner wall (1a) and/or the upper wall (1c).

10. The drilling template according to any one of claims 1 to 9,
**characterized in that**
the fluid-carrying element (4, 8) at least partially comprises or is produced to comprise the outer wall (1b) and/or inner wall (1a) and/or upper wall (1c), or is formed integrally with the outer wall (1b) and/or inner wall (1a) and/or upper wall (1c).

11. The drilling template according to any one of claims 1 to 10,
**characterized in that**
a filter or a grid-like element is arranged between the outlet (4b, 8b) of the fluid-carrying element (4) and the breakthrough.

12. The drilling template according to any one of claims 1 to 11,
**characterized in that**
means for the connection for the suction of a fluid and/or a liquid and/or solid drilling residue are provided or can be attached at the outlet (4b, 8b) of the fluid-carrying element (4, 8).

13. The drilling template according to any one of claims 1 to 12,
**characterized in that**
the fluid-carrying element (4, 8) has an inlet coordinate KE of the inlet (4a, 8a), and an outlet coordinate KA of the outlet (4b, 8b), and a section line S, wherein the section line S connects the inlet coordinate KE and the outlet coordinate KA to one another in a linear manner and/or
that the fluid-carrying element (4, 8) comprises a branch (9), in particular a plurality of branches, and/or
that the drilling template comprises a further fluid-carrying element (4, 8), wherein the fluid-carrying element (4, 8) is provided for introducing a fluid, in particular a gaseous fluid, and/or
that the drilling template comprises a web (6), wherein the fluid-carrying element (4, 8) is at least partially formed as an integral part of the web (6).

14. A method for the virtual design and/or production of a drilling template for drilling an implant for a dental implant, according to any one of the preceding claims 1 to 13, comprising the following method steps:
- providing a virtual implant plan, in particular a 3D implant plan,
- generating a virtual design of a drilling template, in particular, the position or location and orientation of the passage opening (2) and the breakthrough (3, 3') and of the fluid-carrying element (4, 8), in particular the course, being taken into account, taking into account the position or location and orientation of the implant specified in the virtual implant plan.

15. The method according to claim 14, further comprising the following method steps:
- calculating a connecting straight line V1 based on a predetermined inlet coordinate KE of the inlet and an outlet coordinate KA of the outlet,
- calculating a connecting straight line V2 based on a predetermined inlet coordinate KE of the inlet and an implant (reference) coordinate KI,
- calculating or spanning or defining a plane El which comprises the connecting straight line V1 and V2,
- calculating or determining the section course S of the plane E1 with the outer wall and/or inner wall and/or upper wall of the drilling template,
- generating a fluid-carrying element based on the section course S, and/or
further comprising the following method steps:
- determining individual course points Pi on the surface of the virtual design of the drilling template, in particular the inlet coordinate KE of the inlet and the outlet coordinate KA of the outlet,
- generating individual connecting lines Vi between the course points Pi, wherein the connecting lines are projected onto the surface of the virtual design of the drilling template, thus depicting a cutting course S,
- generating a fluid-carrying element based on the section course S, and/or
further comprising the following method steps:
- that the virtual design of the drilling template is proposed to a user for authentication,
- that the user can reject the proposal to make changes to the virtual design of the drilling template, in particular the position or location and orientation of the passage opening (2) and the breakthrough (3, 3') and the fluid-carrying element (4, 8), in particular the course of the fluid-carrying element, and/or
further comprising the following method steps:
- generating at least one digital data set of the virtual drilling template,
- generating a physical drilling template with the aid of an additive manufacturing process based on the digital data set.

## Revendications

1. Gabarit de perçage (1) destiné à effectuer un perçage d'implant pour un implant dentaire, pourvu d'un orifice de passage (2) et d'au moins une ouverture (3), le gabarit de perçage étant prévu, respectivement, étant applicable, pour la dépose, respectivement, l'installation, sur la mâchoire, le palais et/ou une ou plusieurs dents, et étant adapté au moins partiellement à la géométrie de la mâchoire, du palais et/ou de la dent ou des dents, l'orifice de passage (2) étant prévu pour faire passer une perceuse, notamment une perceuse pour implants dentaires, et/ou pour l'insertion d'un manchon de guidage pour une perceuse, et l'ouverture (3) étant prévue pour l'acheminement d'un fluide, le gabarit de perçage présentant un élément transportant un fluide (4, 8), l'élément transportant le fluide (4, 8) étant prévu pour l'aspiration d'un résidu de perçage liquide et/ou solide,
**caractérisé en ce qu'**une zone de renforcement (2a) est prévue autour de l'orifice de passage (2), où, en-dessous de la zone de renforcement (2a), il est prévu une cavité (5), laquelle est entourée, orientée vers l'extérieur, d'une paroi extérieure (1b) du gabarit de perçage (1) orienté vers les joues, vestibulaire dans la zone dentaire, et d'une paroi intérieure (1a) orientée oralement dans l'espace buccal intérieur, où les parois intérieure et extérieure (1a, 1b) sont conçues pour un dépôt sur la gencive et étanchéifient la cavité (5) par rapport à l'espace de la gorge, où la cavité (5) présente une liaison fluidique efficace vers l'ouverture (3) et l'orifice de passage (2), où la cavité (5) fournit un espace de collecte permettant de recueillir des résidus de perçage,
le gabarit de perçage (1) étant conçu pour une fixation complémentaire sur la mâchoire, et/ou le palais, permettant de créer par aspiration une dépression s'appliquant en permanence entre le gabarit de perçage (1) et la mâchoire, respectivement, le palais.

2. Gabarit de perçage selon la revendication 1,
**caractérisé en ce que**
l'élément transportant le fluide (4, 8) présente une entrée (4a, 8a) et une sortie (4b, 8b), où l'élément transportant le fluide (4, 8) est relié, respectivement, peut être relié, fluidiquement de manière efficace avec l'ouverture (3, 3') par l'entrée (4a, 8a).

3. Gabarit de perçage selon la revendication 1 ou la revendication 2,
**caractérisé en ce que**
l'orientation de l'ouverture (3, 3') est déterminée, respectivement calculée, sur la base d'un vecteur d'orientation.

4. Gabarit de perçage selon l'une des revendications 1 à 3,
**caractérisé en ce que**
la sortie (4b, 8b) de l'élément transportant le fluide est orientée essentiellement vers l'orifice buccal (de façon labiale) ou vers la joue (de façon buccale).

5. Gabarit de perçage selon l'une des revendications 1 à 4,
**caractérisé en ce que**
l'élément transportant le fluide (4, 8) présente une section transversale en forme de tuyau ou en forme de rectangle plat.

6. Gabarit de perçage selon l'une des revendications 1 à 5,
**caractérisé en ce que**
l'élément transportant le fluide (4, 8) est prévu au moins partiellement sur la paroi extérieure ou dans la paroi extérieure (1b), respectivement, est conçu intégralement avec la paroi extérieure (1b).

7. Gabarit de perçage selon l'une des revendications 1 à 6,
**caractérisé en ce que**
l'élément transportant le fluide (4, 8) est prévu au moins partiellement sur la paroi intérieure ou dans la paroi intérieure (1a), respectivement est conçu intégralement avec la paroi intérieure (1a).

8. Gabarit de perçage selon l'une des revendications 1 à 7,
**caractérisé en ce que**
le gabarit de perçage présente une paroi supérieure (1c) orientée jusque vers la ligne de morsure finale (ligne d'occlusion), où l'élément transportant le fluide (4, 8) est prévu au moins partiellement sur la paroi supérieure et/ou dans la paroi supérieure (1c), respectivement, est conçu intégralement avec la paroi supérieure (1c).

9. Gabarit de perçage selon l'une des revendications 1 à 8,
**caractérisé en ce que**
l'élément transportant le fluide (4, 8) est prévu suivre au moins partiellement l'évolution de la paroi extérieure (1b), et/ou de la paroi intérieure (1a), et/ou de la paroi supérieure (1c).

10. Gabarit de perçage selon l'une des revendications 1 à 9,
**caractérisé en ce que**
l'élément transportant le fluide (4, 8) comprend, respectivement, est conçu comprenant, au moins partiellement la paroi extérieure (1b), et/ou la paroi intérieure (1a), et/ou la paroi supérieure (1c), respectivement, est conçu intégralement avec la paroi extérieure (1b, et/ou la paroi intérieure (1a), et/ou la paroi supérieure (1c).

11. Gabarit de perçage selon l'une des revendications 1 à 10,
**caractérisé en ce qu'**un
filtre ou un élément de type grille est disposé entre la sortie (4b, 8b) de l'élément transportant le fluide (4) et l'ouverture.

12. Gabarit de perçage selon l'une des revendications 1 à 11,
**caractérisé en ce que**
des moyens de raccordement pour l'aspiration d'un fluide et/ou d'un résidu de perçage liquide et/ou solide sont prévus, respectivement peuvent être rapportés, sur la sortie (4b, 8b) de l'élément transportant le fluide (4, 8).

13. Gabarit de perçage selon l'une des revendications 1 à 12,
**caractérisé en ce que**
l'élément transportant le fluide (4, 8) présente une coordonnée d'entrée KE de l'entrée (4a, 8a), et une coordonnée de sortie KA de la sortie (4b, 8b), ainsi qu'une ligne de coupe S, où la lige de coupe S relie la coordonnée d'entrée KE et la coordonnée de sortie KA l'une à l'autre sous la forme d'une ligne, et/ou
que l'élément transportant le fluide (4, 8) présente une ramification (9), notamment, plusieurs ramifications, et/ou
que le gabarit de perçage présente un nouvel élément transportant le fluide (4, 8), où l'élément transportant le fluide (4, 8) est prévu pour l'insertion d'un fluide, notamment d'un fluide sous forme de gaz, et/ou
que le gabarit de perçage présente une tige (6), où l'élément transportant le fluide (4, 8) est conçu au moins partiellement en tant que composant intégral de la tige (6).

14. Procédé de conception virtuelle et/ou de fabrication d'un gabarit de perçage destiné à effectuer un perçage d'implant pour un implant dentaire, selon l'une des revendications précédentes 1 à 13, comprenant les étapes de procédé suivantes :
- mise au point d'une planification d'implant virtuel, notamment d'une planification d'implant en 3D,
- création d'une conception virtuelle d'un gabarit de perçage, où, en particulier, il est tenu compte de la position, respectivement, de l'emplacement et de l'orientation de l'orifice de passage (2) et de l'ouverture (3, 3'), et de l'élément transportant le fluide (4, 8), notamment l'évolution, en tenant compte de la position, respectivement de l'emplacement déterminés dans la planification d'implant virtuelle et de l'orientation de l'implant.

15. Procédé selon la revendication 14, comprenant en outre les étapes de procédé suivantes :
- calcul d'une ligne de connexion V1 sur la base d'une coordonnée d'entrée KE déterminée préalablement de l'entrée et d'une coordonnée de sortie KA de la sortie,
- calcul d'une ligne de connexion V2 sur la base d'une coordonnée d'entrée KE déterminée préalablement de l'entrée et d'une coordonnée de d'implant (référence) KI,
- calcul, respectivement, déploiement, respectivement, détermination d'un plan E1, lequel comprend les lignes de connexion V1 et V2,
- calcul, respectivement, détermination d'une ligne de coupe S du plan E1 avec la paroi extérieure, et/ou la paroi intérieure, et/ou la paroi supérieure du gabarit de perçage,
- création d'un élément transportant le fluide sur la base de la ligne de courbe S, et/ou
comprenant en outre les étapes de procédé suivantes :
- détermination de points de lignes individuels Pi sur la surface de la conception virtuelle du gabarit de perçage, notamment, de la coordonnée d'entrée KE de l'entrée et de la coordonnée de sortie KA de la sortie,
- création de lignes de connexion Vi individuelles entre les points de lignes Pi, où les lignes de connexion sont projetées sur la surface de la conception virtuelle du gabarit de perçage et représentent ainsi une ligne de coupe S,
- création d'un élément transportant le liquide sur la base de la ligne de coupe S, et/ou
comprenant en outre les étapes de procédé suivantes :
- que la conception virtuelle du gabarit de perçage soit proposée à un utilisateur pour être rendue légitime,
- que l'utilisateur puisse refuser la proposition afin d'entreprendre des modifications sur la conception virtuelle du gabarit de perçage, notamment la position, respectivement, l'emplacement et l'orientation de l'orifice de passage (2) et de l'ouverture (3, 3') et de l'élément transportant le fluide (4, 8), notamment l'évolution de l'élément transportant le fluide, et/ou
comprenant en outre les étapes de procédé suivantes :
- création d'au moins un ensemble de données numériques du gabarit de perçage virtuel,
- création d'un gabarit de perçage physique à l'aide d'un procédé de conception générative sur la base de l'ensemble de données numériques.
